# NEUE EUROPÄISCHE PATENTSCHRIFT

(11) **EP 2 005 029 B2**
(45) Veröffentlichungstag und Bekanntmachung des Hinweises auf die Entscheidung über den Einspruch: **18.04.2018**
(45) Hinweis auf die Patenterteilung: 30.06.2010
(21) Anmeldenummer: 07724054.7
(22) Anmeldetag: 05.04.2007
(51) Int. Cl.: F16H 7/12, F16H 7/08

(54) **SPANNER FÜR EINEN ENDLOSTRIEB**
TENSIONER FOR AN ENDLESS DRIVE
TENDEUR POUR TRANSMISSION SANS FIN

(30) Priorität: 12.04.2006 DE 102006017287
(43) Veröffentlichungstag der Anmeldung: 24.12.2008
(73) Patentinhaber: Litens Automotive GmbH, 63517 Gelnhausen (DE)
(72) Erfinder: GUHR, Wolfgang, 63584 Gründau (DE)
(74) Vertreter: Grünecker Patent- und Rechtsanwälte PartG mbB
(86) Internationale Anmeldenummer: PCT/EP2007/003113
(87) Internationale Veröffentlichungsnummer: WO 2007/118625

(56) Entgegenhaltungen:
- EP-A1- 0 450 620
- EP-A1- 0 780 597
- EP-A1- 0 907 040
- JP-A- 2005 299 810
- US-A- 5 803 849
- US-A- 5 803 849
- US-A1- 20030 216 204
- US-B1- 6 609 988

## Beschreibung

Die vorliegende Erfindung betrifft einen Spanner für einen Endlostrieb, insbesondere einer Verbrennungskraftmaschine, mit den Merkmalen des Oberbegriffs des Anspruchs 1.

Ein Spanner ist aus der DE 40 10 928 A1 bekannt, welcher ein Basisteil mit einer Reibungsbuchse aufweist, innerhalb welcher eine Hülse eines Spannteiles mit Spannausleger drehbar gelagert ist. Zwischen der Hülse und der Reibungsbuchse ist eine Lagerbuchse vorgesehen.

Das Spannteil wird bezüglich des Basisteiles mit Hilfe eines als Spiralfeder ausgebildeten Federelementes gespannt, welches die Reibungsbuchse umgibt Zwischen der Spiralfeder und der Reibungsbuchse ist eine Federbuchse vorgesehen. Wird das Spannteil gegen die Spannkraft des Federelementes gedreht, zieht sich das Federelement eng zusammen, wobei es sich fest um die Federbuchse schlingt. Hierdurch drückt es die Federbuchse fest gegen die Reibungsbuchse. Mit der so bewirkten hohen Reibung zwischen Federbuchse und Reibungsbuchse wird die Relativdrehung des Spannteiles gegenüber dem Basisteil gut gedämpft. Dieses Grundprinzip hat sich bewährt und wird standardmäßig verwendet. Die Konstruktionen wurden ständig weiter verbessert. Jedoch ist der Aufbau des Spanners relativ komplex.

Aus der EP 1 640 636 A2 ist eine gattungsgemäße Riemenspannvorrichtung mit einer schraubenartigen Torsionsfeder und einer Bandfeder bekannt. Ein Spiralende der Torsionsfeder stützt sich in Umfangsrichtung an einem umgebogenen Ende der Bandfeder ab, welche sich ihrerseits in Umfangsrichtung an einem festen Teil abstützt. Am Außenumfang der Bandfeder ist eine Dämpfungshülse vorgesehen.

Die JP 2003-254399 A betrifft einen Spanner bei welchem eine Torsionsfeder und ein kreisbogenartiges Reibelement in Reihe geschaltet sind. Ein Ende des Reibmittels wird in Umfangsrichtung durch ein Stoppmittel gehalten, und gegen das andere Ende des Reibmittels drückt ein umgebogenes Ende der Spiralfeder. Auf diese Weise wird das Reibmittel in seiner Umfangsrichtung unter Druck gesetzt, wodurch es gegen eine Innenwandung eines Zylinderelementes gedrückt wird und durch seine Reibung hiermit seine Dämpfungsfunktion erfüllt. Dabei bleibt zwischen der Torsionsfeder und dem Reibelement stets der baulich vorgesehene radiale Abstand bestehen, da sich die Torsionsfeder tendenziell zusammenzieht, wenn sie mit ihrem umgebogenen Ende in Umfangsrichtung gegen das Reibmittel drückt.

Aus der US 5,803,849 ist ein Riemenspanner mit einem stationären Element und einem Spannarm bekannt, zwischen welchen eine vorgespannte Spiralfeder vorgesehen ist. Der Spannarm trägt ein Dämpfungselement, welches die Spiralfeder abschnittsweise umgibt und mit Hilfe von zwei C-förmigen Ringfedern radial auswärts gegen eine innere Umfangsfläche des stationären Elementes gedrückt wird.

Die EP 0 780 597 A1 und die WO 01/46603 betreffen einen Riemenspanner mit einem Bremsschuh, welcher von einer Verlängerung einer Torsionsfeder gegen die Innenwandung eines Zylinderteiles gedrückt wird. Der Bremsschuh hat einen kompakten, blockartigen Körper, an dessen äußerem Umfang ein dünner Reibbelag angebracht ist.

Aus der US 2003/0216204 A1 sind Dämpfungsmechanismen für Riemenspanner bekannt. Die Dämpfungsmechanismen weisen jeweils einen Dämpfungsschuh auf, welcher ein U-förmiges Aufnahmeprofil zum Aufnehmen eines Endes einer Torsionsfeder hat.

Der vorliegenden Erfindung liegt die Aufgabe zugrunde, einen Spanner dahingehend zu verbessern, dass bei guter Dämpfung ein einfacherer Aufbau möglich ist.

Die Aufgabe wird erfindungsgemäß gelöst mit einem Spanner mit den Merkmalen des Anspruches 1.

Überraschenderweise kann mit der radial außerhalb des Federelementes angeordneten Reibvorrichtung eine gute Dämpfung erzielt werden. Zudem eröffnet die radial äußere Lage der Reibvorrichtung die Möglichkeit, eine große Reibfläche für ein höheres Maß an Dämpfung und/oder eine kompaktere Bauweise bei einem guten Maß an Dämpfung zu realisieren.

Während sich das Federelement bei Spannern des Standes der Technik zusammenzieht, ist bei dem Federelement der vorliegenden Erfindung eine andere Belastungsart vorgesehen. Die Tragbuchse trägt den Reibbelag und überträgt die Kräfte des Federelementes auf den Reibbelag. Die Tragbuchse kann der Kraftverteilung dienen, wenn das Federelement nur bereichsweise an der Reibvorrichtung anliegt, beispielsweise wenn es als Spiralfeder ausgebildet ist.

Die Reibvorrichtung wird beim Spannen durch das Federelement aufgeweitet. Hierdurch wird eine höhere Dämpfung erzielt, denn durch das Aufweiten wird die Reibfläche effektiver mit dem betreffenden Teil in Anlage gebracht und es wird eine größere Anpresskraft hierauf ausgeübt. Durch das Aufweiten kann die Reibvorrichtung die Kraft, mit welcher es vom Federelement aufgeweitet wird, effektiv weitergeben.

Das Federelement dehnt sich beim Spannen radial aus. So wird das Aufweiten und stärkere Anpressen der Reibvorrichtung an das betreffende Teil durch eine Formänderung des Federelementes bewirkt.

Vorzugsweise kann die Reibvorrichtung mit einer radial äußeren Seite an dem Basisteil oder dem Spannteil anliegen. Auf diese Weise hat die Reibvorrichtung eine größere Reibfläche, als wenn sie innerhalb des Federelementes angeordnet wäre. Mit der größeren Reibfläche ist eine größere Dämpfung oder eine kompaktere Bauweise bei gleicher Dämpfung möglich.

Bevorzugterweise kann die Reibvorrichtung bereits in einem entspannten Zustand des Federelementes an dem Federelement gehalten werden. Hierdurch behält die Reibvorrichtung auch im entspannten Zustand des Federelementes ihre vorgesehene Lage an diesem bei. Dies ermöglicht es beispielsweise, die Reibvorrichtung an dem Federelement vorzumontieren und diese Einheit dann zu verbauen.

Günstigerweise kann die Reibvorrichtung eine radial einwärts vorstehende Haltestruktur aufweisen, mit welcher sie in einer axialen Richtung an dem Federelement gehalten wird. Auf diese Weise wird die axiale Lage der Reibvorrichtung relativ zum Federelement gesichert. Ist das Federelement beispielsweise als Spiralfeder ausgebildet, kann die Haltestruktur sich mit den Federwindungen in Eingriff befindend ausgestaltet sein.

Je ein in Umfangsrichtung weisendes Federende des Federelements befindet sich stirnseitig mit einem Drehanschlag des Basisteiles und des Spannteiles in Anlage. Hierdurch wird die Lage des Federelementes relativ zum Basisteil und zum Spannteil in einer Drehrichtung gesichert. Mit dem Drehanschlag können Spannkräfte übertragen werden.

Bevorzugterweise kann sich die Reibvorrichtung stirnseitig mit einem Drehanschlag des Basisteils oder des Spannteils in Anlage befinden. Auf diese Weise wird die Lage der Reibvorrichtung bezüglich des betreffenden Teiles in einer Drehrichtung gesichert. Von dem Drehanschlag können insbesondere durch die dämpfende Reibung bedingte Kräfte der Reibvorrichtung aufgenommen werden.

Vorzugsweise kann die Reibvorrichtung zwischen dem Federelement und dem Drehanschlag gehalten werden. So wird die Reibvorrichtung in einer Richtung durch den Drehanschlag gehalten und in der anderen Richtung durch das Federelement.

Besonders günstig kann die Reibvorrichtung einen sich radial erstreckenden Haltevorsprung aufweisen, welcher zwischen dem Drehanschlag und dem Federelement angeordnet ist Mit dem Haltevorsprung wird die Reibvorrichtung vom Drehanschlag und/oder vom Federelement gehalten.

Bevorzugterweise kann die Reibvorrichtung einen sich radial erstreckenden Haltevorsprung aufweisen, welcher in einer axialen Richtung an dem Federelement anliegt. Mit dem Haltevorsprung wird die Reibvorrichtung in der axialen Richtung an dem Federelement gehalten. Wenn das Federelement beispielsweise als Spiralfeder ausgebildet ist, kann der Haltevorsprung 32 sich in Anlage mit wenigstens einer Federwindung befinden.

Besonders bevorzugt können das Federelement und die Reibvorrichtung gemeinsam in einem Einbettungsprofil des Basisteils oder des Spannteils verlaufen. So kann die Einbettung für das Federelement für die Reibvorrichtung mitgenutzt werden.

Besonders vorteilhaft kann das Basisteil oder das Spannteil eine die Reibvorrichtung umgebende Außenbuchse aufweisen, an welcher die Reibvorrichtung reibt. Auf diese Weise wird die Außenbuchse zum Ummanteln der Treibvorrichtung genutzt und hat eine integrierte Dämpfungsfunktion.

Günstigerweise kann das Basisteil oder das Spannteil eine die Reibvorrichtung umgebende Außenbuchse aufweisen und das jeweils andere Teil einen Endabschnitt der Außenbuchse umgreifen. Hierdurch wird dem Eindringen von Fremdmedien in das Innere des Spanners entgegengewirkt.

Bevorzugterweise können eine Innenbuchse des Basisteiles und eine Innenbuchse des Spannteiles axial voneinander beabstandet sein, wobei die Innenbuchsen die Drehachse des Spannteiles umgeben. Dies ermöglicht einen einfachen Aufbau, welcher ohne ein axiales Lager zwischen Spannteil und Basisteil auskommen kann.

Vorteilhafterweise kann der Bereich radial innen zwischen dem Federelement und dem Basisteil und/oder dem Spannteil ein lichter Abstand sein. Diese Ausgestaltung kommt ohne zusätzliche Elemente in dem genannten inneren Bereich aus.

Ausführungsformen der vorliegenden Erfindung sind in den Figuren veranschaulicht und werden nachfolgend beschrieben. Es zeigen:
- Figur 1: eine Längsschnittansicht einer ersten Ausführungsform eines erfindungsgemäßen Spanners,
- Figur 2: eine vergrößerte Ansicht eines Ausschnittes II von Figur 1,
- Figur 3: eine prinzipartige Querschnittsansicht des Spanners etwa gemäß einer Linie III in Figur 1,
- Figur 4: eine prinzipartige Querschnittsansicht des Spanners gemäß einer Linie IV in Figur 1, und
- Figur 5: eine prinzipartige Querschnittsansicht einer zweiten Ausführungsform eines erfindungsgemäßen Spanners, wobei die Querschnittsansicht etwa gemäß der Linie III in Figur 1 gewählt ist.

In der nachfolgenden Beschreibung der Ausführungsformen der Erfindung werden für gleiche Elemente gleiche Bezugszeichen verwendet.

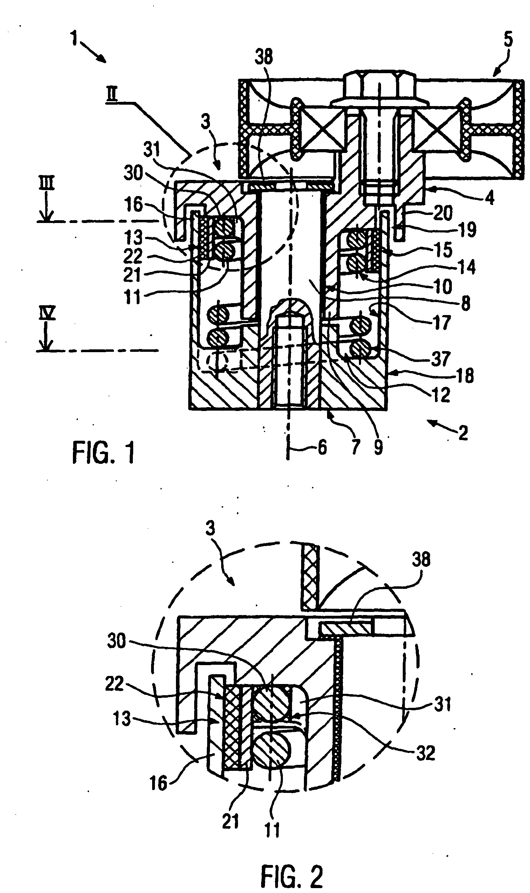

Figur 1 zeigt eine Längsschnittansicht einer Ausführungsform eines erfindungsgemäßen Spanners 1. Mit dem Spanner kann ein Endlostrieb gespannt werden, insbesondere ein Riementrieb einer Verbrennungskraftmaschine. Der Spanner 1 weist ein Basisteil 2 auf, mit welchem er beispielsweise an der Verbrennungskraftmaschine befestigt werden kann, sowie ein Spannteil 3 mit einem Spannausleger 4, welcher eine Spannrolle 5 trägt. Das Spannteil 3 ist um eine Achse 6 relativ zu dem Basisteil 2 drehbar.

Das Basisteil 2 weist eine Innenbuchse 7 auf, welche in dieser Ausführungsform der Erfindung eine Lagerbuchse ist und mit dem Basisteil 2 einstückig ausgebildet ist. In die Lagerbuchse 7 ist ein Lagerzapfen 8 eingepresst. Das Spannteil 3 weist eine Innenbuchse 9 auf, welche in dieser Ausführungsform der Erfindung eine mit dem Spannteil einstückig ausgebildete Drehbuchse 9 ist. Mit seiner Drehbuchse 9 ist das Spannteil 3 drehbar an dem Lagerzapfen 8 gelagert, wobei die Drehbuchse 9 und die Lagerbuchse 7 axial voneinander beabstandet sind. Zwischen der Drehbuchse 9 und dem Lagerzapfen 8 ist eine Gleithülse 10 vorgesehen.

Zwischen dem Basisteil 2 und dem Spannteil 3 ist ein Federelement 11 kraftbeaufschlagend angeordnet, das in dieser Ausführungsform der Erfindung eine Spiralfeder ist. Das Feder element 11 umgibt einen Teil der Lagerbuchse 7 und der Drehbuchse 9, wobei ein radial inneren Bereich 12 zwischen Federelement 11 und der Lagerbuchse 7 einerseits sowie der Drehbuchse 9 andererseits ein lichter Abstand ist. Das heißt der Bereich radial innen zwischen dem Federelement 11 sowie dem Basisteil und dem Spannteil ein lichter Abstand ist. Das Federelement 11 drückt das Spannteil 3 und das Basisteil 2 axial auseinander. Mit einer am Lagerzapfen 8 angebrachten Axialsicherung 38 wird das Spannteil 3 axial am Basisteil 3 gehalten. Wie in Figur 1 gezeigt, ist die Axialsicherung in dieser Ausführungsform der Erfindung eine Scheibe, die mit einem Schraubbolzen am Lagerzapfen befestigt ist.

Zum Dämpfen der Relativbewegung zwischen Basisteil 2 und Spannteil 3 weist der Spanner 1 eine zwischen dem Federelement 11 und dem Basisteil 2 oder dem Spannteil 3 vorgesehene Reibvorrichtung 13 auf. In dieser Ausführungsform der Erfindung ist die Reibvorrichtung 13 zwischen dem Basisteil 2 und einem spannteilseitigen Ende 14 des Federelementes 11 vorgesehen. Dabei ist die Reibvorrichtung 13 radial außerhalb des Federelementes 11 angeordnet und liegt mit einer radial äußeren Seite 15 an dem Basisteil 2 an.

Die Reibvorrichtung 13 erstreckt sich etwa über 20% bis 40% der axialen Länge des Federelementes 11, vorzugsweise etwa über ein Viertel bis ein Drittel der axialen Länge des Federelementes. In dieser Ausführungsform der Erfindung erstreckt sich die Reibvorrichtung etwa über zwei Windungen des Federelementes 11.

Das Basisteil 2 weist in dieser Ausführungsform der Erfindung eine zylinderförmige Außenhülse 16 auf, welche die Reibvorrichtung 13 umgibt und an deren Innenseite 17 die Reibvorrichtung 13 anliegt und bei einer Relativbewegung zwischen Basisteil und Spannteil reibt. Die Außenbuchse 16 erstreckt sich von einem Grundabschnitt 18 des Basisteiles 2 das Fe derelement 11 über seine gesamte Länge umgebend in Richtung zu dem Spannteil 3. Das Spannteil 3 umgreift einen Endabschnitt 19 der Außenbuchse 16, wobei ein ringförmiger Kragen 20 des Spannteiles 3 den Endabschnitt 19 umgibt.

Die Reibvorrichtung 13 weist radial innen eine Tragbuchse 21 auf, an welcher radial außen ein Reibbelag 22 vorgesehen ist. Die Tragbuchse 21 und der Reibbelag 22 sind als separate Elemente ausgebildet.

Die Tragbuchse 21 besteht aus einem federelastischen Material, vorzugsweise aus Stahl. Sie kann auch aus Aluminium ausgebildet sein. Die Tragbuchse 21 verteilt die Kräfte des mit seinen Federwindungen linienförmig an ihrem Inneren anliegenden Federelementes 11 gleichmäßig auf den Reibbelag 22. Der Reibbelag 22 besteht vorzugsweise aus einem Kunststoffmaterial, beispielsweise aus einem Polyamid, vorteilhafterweise aus modifiziertem Polyamid 4.6.

Da die Reibvorrichtung 13 radial außen an dem Federelement 11 angeordnet ist, steht mit ihrer radial äußeren Seite 15 eine große Reibfläche zur Verfügung, insbesondere im Vergleich zu Spannem, bei welchen eine Reibvorrichtung radial innerhalb eines Federelementes vorgesehen ist. Mit der signifikant größeren Reibfläche der erfindungsgemäßen Reibvorrichtung lässt sich daher eine deutlich höhere Dämpfungswirkung erzielen oder es kann bei gleicher Dämpfung eine kompaktere Bauweise gewählt werden, insbesondere in axialer Richtung.

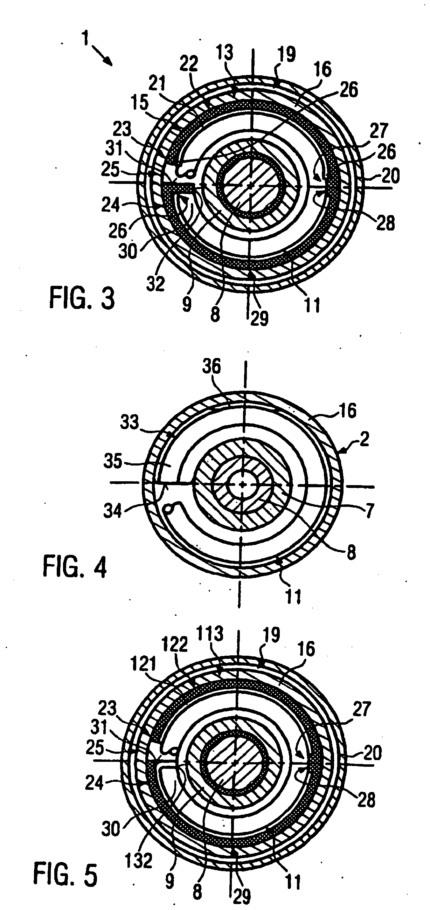

Die Reibvonichtung ist im Wesentlichen ring- oder zylinderförmig ausgebildet. Wie aus der schematischen Schnittdarstellung in Figur 3 hervorgeht, ist die Reibvorrichtung 13 in ihrem Umfang unterbrochen, das heißt sie hat ein im Wesentlichen C-förmiges Querschnittsprofil. Hierdurch kann die Reibvorrichtung 13 aufgeweitet werden, wobei sich ein Schlitz 25 zwischen ihren beiden C-Enden 23, 24 vergrößert.

Das Federelement 11 dehnt sich beim Spannen radial aus, wobei sich seine Federwindungen radial weiten. Hierdurch wird die Reibvorrichtung 13 aufgeweitet und stärker gegen die Außenbuchse 16 des Basisteiles gedrückt. Dadurch wird die radial äußere Seite 15 der Reibvorrichtung 13 über ihren Umfang in gleichmäßigere und effektivere Anlage mit der Außenbuchse 16 gebracht, wodurch die Reibung hiermit gleichmäßig über den Umfang verteilt stattfindet. Zudem sorgt die höhere Anpresskraft für ein höheres Reibmoment. Durch das unterbrochene Querschnittsprofil werden die radialen Kräfte des Federelementes effektiv auf die Außenbuchse übertragen.

Überraschenderweise arbeitet der erfindungsgemäße Spanner trotz des sich nach außen aufweitenden Federelementes stabil. Bei Spannern des Standes der Technik zieht sich die Feder zusammen und wird radial innen abgestützt, insbesondere durch eine Federbuchse, welche sich über einen Hauptteil der axialen Länge der Feder erstreckt. Dagegen bleibt das Federelement der vorliegenden Erfindung ohne ein inneres Abstützen ausreichend formstabil.

Die Tragbuchse 21 weist radial einwärts vorstehende Halteprofile 26 auf, welche eine Haltestruktur ausbilden, mit welcher die Reibvorrichtung 13 in Richtung der Achse 6 an dem Federelement 11 gehalten wird. Ein Halteprofil 26 ist jeweils an den C-Enden 23, 24 vorgesehen. Ein weiteres Halteprofil 26 ist an der Peripherie eines Durchbruches 27 der Tragbuchse 21 ausgebildet. Durch den Durchbruch 27 erstreckt sich ein Sicherungsvorsprung 28 des Reibbelages 22 radial einwärts. Hierdurch wird der Reibbelag in Drehrichtung und in axialer Richtung in seiner Lage an der Tragbuchse 21 gesichert.

Die Halteprofile 26 werden vorzugsweise dadurch hergestellt, dass die Tragbuchse 21 an den betreffenden Stellen radial nach innen gebogen wird. Die Halteprofile 26 kommen mit den Windungen des Federelementes 11 in Anlage und sichem hierdurch die Reibvorrichtung in ihrer axialen Lage an dem Federelement 11. Mit den Halteprofilen wird die Reibvorrichtung auch im entspannten Zustand des Federelementes an diesem gehalten.

Das Federelement 11 befindet sich stimseitig mit einem Drehanschlag des Basisteiles und einem Drehanschlag des Spannteiles in Anlage. Hierdurch ist die Lage des betreffenden Endes des Federelementes gegenüber dem jeweiligen Teil in einer Drehrichtung gesichert und es können über das Federelement Kräfte zwischen Basisteil und Spannteil übertragen werden.

Das Spannteil 3 weist auf Seiten des Federelementes 11 ein Einbettungsprofil auf, das vorzugsweise als eine Spiralnut 29 ausgebildet ist, in welcher das Federelement, das heißt wenigstens das Ende 30 seiner spannteilseitig letzten Windung, verläuft. Das genannte Windungsende 30, das ein in Umfangsrichtung weisendes Federende ist, liegt an einer radial auswärts und in Richtung der Achse 6 verlaufenden Anschlagsfläche 31 der Spiralnut 29 an. Die Anschlagsfläche 31 definiert das Ende der Spiralnut 29 und ist der Drehanschlag des Spannteiles, wie aus den Figuren 1 und 2 hervorgeht.

Wie aus diesen Figuren ebenfalls hervorgeht, befindet sich die Reibvorrichtung 13 stimseitig mit einem Drehanschlag des Spannteiles in Anlage, wodurch die Lage der Reibvorrichtung gegenüber dem Spannteil in einer Drehrichtung gesichert ist und durch Reibung mit der Außenbuchse 16 bedingte Kräfte aufgenommen werden können. In dieser Ausführungsform der Erfindung ist die Spiralnut 29 des Spannteiles 3 der Drehanschlag für die Reibvorrichtung die genannte Anschlagsfläche 31. Wie insbesondere in Figur 3 gezeigt ist, verlaufen das Federelement 11 und die Reibvorrichtung 13 gemeinsam in der Spiralnut 29. Die Reibvorrichtung hat stimseitig eine zur Spiralnut korrespondierende Form.

An ihrem der genannten Anschlagsfläche 31 zugeordneten C-Ende 24 weist die Reibvorrichtung einen sich radial erstreckenden Haltevorsprung auf, welcher zwischen der Anschlagsfläche 31 und dem genannten Windungsende 30 des Federelementes angeordnet ist. Das heißt die Treibvorrichtung wird zwischen dem Federelement 11 und dem Drehanschlag gehalten. Über den Haltevorsprung befindet sich das Federelement indirekt in Anlage mit dem Spannteil.

Der Haltevorsprung befindet sich in axialer Richtung in Anlage mit dem Federelement, indem er an der nächsten Federwindung anliegt, wie aus in der vergrößerten Darstellung in Figur 2 hervorgeht. Hierdurch sichert er die axiale Lage der Reibvorrichtung an dem Federelement 11. Mit dem Haltevorsprung wird die Reibvorrichtung auch im entspannten Zustand des Federelementes an diesem gehalten.

Durch das Vorsehen des sich radial erstreckenden Haltevorsprunges ist es möglich, die Reibvorrichtung in einer axialen Richtung an dem Federelement 11 zu sichern, ohne dass die Halteprofile 26 vorgesehen sein müssen.

In dieser Ausführungsform der Erfindung ist der Haltevorsprung eine sich radial einwärts erstreckende und mit dem Reibbelag 22 einstückig ausgebildete Haltelasche 32.

Alternativ kann der Haltevorsprung als eine sich radial einwärts erstreckende und mit der Tragbuchse einstückig ausgebildete Haltelasche sein. Es ist auch möglich, den Haltevorsprung als eine sich radial einwärts erstreckende und mit dem Reibbelag sowie der Tragbuchse einstückig ausgebildete Haltelasche vorzusehen.

Wie aus den Figuren 1 und 4 hervorgeht, weist das Basisteil auf Seiten des Federelementes 11 in dieser Ausführungsform der Erfindung ebenfalls ein Einbettungsprofil auf, das als Spiralnut 33 ausgebildet ist. Das Ende der Spiralnut wird durch eine sich radial auswärts und in Richtung der Achse 6 erstreckende Anschlagsfläche 34 definiert. Diese Anschlagsfläche 34 bildet den Drehanschlag des Basisteiles 2. Wenigstens ein Teil der basisteilseitig letzen Windung des Federelementes 11 verläuft in der Spiralnut 33 des Basisteiles 2. Ein Ende 35 dieser Windung, das ein in Umfangsrichtung weisendes Federende ist, liegt an der Anschlagsfläche 34 an.

Wie in Figur 4 gezeigt ist, weist das Basisteil 2 einen sich entlang eines Umfangsabschnittes radial einwärts erstreckenden Abstützvorsprung 36 auf, an welchem das Federelement 11, das heißt wenigstens ein Abschnitt einer Windung hiervon, anliegt. Der Abstützvorsprung 36 stützt das Federelement 11 quer zur Achse 6 ab.

In Figur 5 ist ein erfindungsgemäßer Spanner 101 gemäß einer zweiten Ausführungsform der Erfindung gezeigt. Dieser weist im Unterschied zu dem Spanner 1 der ersten Ausführungsform der Erfindung eine Reibvorrichtung auf, bei welcher der Haltevorsprung eine sich radial einwärts erstreckende und mit der Tragbuchse 21 einstückig ausgebildete Haltelasche 132 ist. Zudem weist die Reibvorrichtung 113 die bei der Reibvorrichtung 13 der ersten Ausführungsform vorgesehenen Halteprofile 26 nicht auf.

Es ist möglich, die Reibvorrichtung durch eine raue Oberfläche an ihrer Innenseite in ihrer Lage an dem Federelement zu sichern, insbesondere bei einer niedrigen bis mittleren Dämpfung. Hierzu kann die Innenseite der Tragbuchse sandgestrahlt sein. Mit der rauen Oberfläche kann die Reibvorrichtung auch im entspannten Zustand des Federelementes gehalten sein.

In den beschriebenen Ausführungsbeispielen umgibt die Reibvorrichtung 13 das spannteilseitige Ende 14 des Federelementes 11. Die Reibvorrichtung ruht relativ zum Spannteil und reibt an dem sich relativ hierzu drehenden Basisteil. Es ist jedoch genauso möglich, dieses Prinzip umzukehren und die Konstruktion des Spanners analog zum beschriebenen Ausführungsbeispiel auszugestalten. Die Reibvorrichtung kann das basisteilseitige Ende 37 des Federelementes umgeben, das heißt relativ zum Basisteil ruhen und an dem sich relativ hierzu bewegenden Spannteil reiben.

## Patentansprüche

1. Spanner (1) für einen Endlostrieb, insbesondere einer Verbrennungskraftmaschine, mit einem Basisteil (2) und einem relativ hierzu um eine gemeinsame Drehachse drehbaren Spannteil (3), mit einem zwischen dem Basisteil (2) und dem Spannteil (3) kraftbeaufschlagend angeordneten Federelement (11), welches sich beim Spannen radial ausdehnt, sowie einer zwischen dem Federelement (11) und dem Basisteil (2) oder dem Spannteil (3) vorgesehenen Reibvorrichtung (13), welche die Relativbewegung zwischen dem Basisteil (2) und dem Spannteil (3) dämpft, wobei die Reibvorrichtung (13) radial außerhalb des Federelementes (11) angeordnet ist, und beim Spannen durch das Federelement aufgeweitet wird, und ein in Umfangsrichtung weisendes Federende (35) des Federelementes (11) stirnseitig an einem Drehanschlag (34) des Basisteils (2) anliegt,
**dadurch gekennzeichnet, dass**
ein in Umfangsrichtung weisendes Federende (30) stirnseitig an einem Drehanschlag (31) des Spannteils (3) anliegt, und
die Reibvorrichtung (13) radial innen eine Tragbuchse (21) aufweist, an welcher radial außen ein Reibbelag (22) vorgesehen ist.

2. Spanner nach Anspruch 1,
**dadurch gekennzeichnet,**
**dass** die Reibvorrichtung (13) mit einer radial äußeren Seite (15) an dem Basisteil (2) oder dem Spannteil anliegt.

3. Spanner nach wenigstens einem der vorhergehenden Ansprüche,
**dadurch gekennzeichnet,**
**dass** die Reibvorrichtung (13) bereits in einem entspannten Zustand des Federelementes (11) an dem Federelement (11) gehalten wird.

4. Spanner nach wenigstens einem der vorhergehenden Ansprüche,
**dadurch gekennzeichnet,**
**dass** die Reibvorrichtung (13) eine radial einwärts vorstehende Haltestruktur (26) aufweist, mit welcher sie in einer axialen Richtung (6) an dem Federelement (11) gehalten wird.

5. Spanner nach wenigstens einem der vorhergehenden Ansprüche,
**dadurch gekennzeichnet,**
**dass** sich die Reibvorrichtung (13) stirnseitig mit einem Drehanschlag (31) des Basisteils (2) oder des Spannteils (3) in Anlage befindet.

6. Spanner nach Anspruch 5,
**dadurch gekennzeichnet,**
**dass** die Reibvorrichtung (13) zwischen dem Federelement (11) und dem Drehanschlag (31) gehalten wird.

7. Spanner nach Anspruch 6,
**dadurch gekennzeichnet,**
**dass** die Reibvorrichtung (13) einen sich radial erstreckenden Haltevorsprung (32) aufweist, welcher zwischen dem Drehanschlag (31) und dem Federelement (11) angeordnet ist.

8. Spanner nach wenigstens einem der vorhergehenden Ansprüche,
**dadurch gekennzeichnet,**
**dass** die Reibvorrichtung (13) einen sich radial erstreckenden Haltevorsprung (32) aufweist, welcher in einer axialen Richtung (6) an dem Federelement (11) anliegt.

9. Spanner nach wenigstens einem der vorhergehenden Ansprüche,
**dadurch gekennzeichnet,**
**dass** das Federelement (11) und die Reibvorrichtung (13) gemeinsam in einem Einbettungsprofil (29) des Basisteils oder des Spannteils (2) verlaufen.

10. Spanner nach wenigstens einem der vorhergehenden Ansprüche,
**dadurch gekennzeichnet,**
**dass** das Basisteil (2) oder das Spannteil (3) eine die Reibvorrichtung (13) umgebende Außenbuchse (16) aufweist, an welcher die Reibvorrichtung (13) reibt.

11. Spanner nach wenigstens einem der vorhergehenden Ansprüche,
**dadurch gekennzeichnet,**
**dass** das Basisteil (2) oder das Spannteil eine die Reibvorrichtung (13) umgebende Außenbuchse (16) aufweist und das jeweils andere Teil (3) einen Endabschnitt (19) der Außenbuchse (16) umgreift.

12. Spanner nach wenigstens einem der vorhergehenden Ansprüche,
**dadurch gekennzeichnet,**
**dass** eine Innenbuchse (7) des Basisteiles (2) und eine Innenbuchse (9) des Spannteiles (3) axial voneinander beabstandet sind, wobei die Innenbuchsen die Drehachse (6) des Spannteiles umgeben.

13. Spanner nach wenigstens einem der vorhergehenden Ansprüche,
**dadurch gekennzeichnet,**
**dass** der Bereich radial innen (12) zwischen dem Federelement (11) sowie dem Basisteil (2) und/oder dem Spannteil (3) ein lichter Abstand ist.

## Claims

1. Tensioner (1) for an endless drive, in particular of an internal combustion engine, said tensioner having a base part (2) and a tensioning part (3) which is rotatable relative to the latter about a common axis of rotation, a spring element (11) which is arranged between the base part (2) and the tensioning part (3) in a force-applying manner, whereby the spring element (11) expands radially in the course of tensioning, and a friction apparatus (13) which is provided between the spring element (11) and the base part (2) or the tensioning part (3) and which damps the relative movement between the base part (2) and the tensioning part (3), wherein the friction apparatus (13) is arranged radially outside the spring element (11) and expands in the course of tensioning by the spring element (11), and an end (35) of the spring element (11) pointing in a circumferential direction contacts, at the end face, a rotary stop (34) of the base part (2),
**characterized in that**
an end (30) of the spring element (11) pointing in a circumferential direction is in contact, at the end face, with a rotary stop (31) of the tensioning part (3), and
the friction apparatus (13) has, radially on the inside, a carrying bush (21), on which a friction lining (22) is provided radially on the outside.

2. Tensioner according to claim 1,
**characterised in that**
the friction apparatus (13) is, with a radially outer side (15), in contact with the base part (2) or the tensioning part.

3. Tensioner according to at least one of the preceding claims,
**characterised in that**
the friction apparatus (13) is already held on the spring element (11) when said spring element (11) is in a non-tensioned state.

4. Tensioner according to at least one of the preceding claims,
**characterised in that**
the friction apparatus (13) has a holding structure (26) which protrudes radially inwards and by means of which it is held in an axial direction (6) on the spring element (11).

5. Tensioner according to at least one of the preceding claims,
**characterised in that**
the friction apparatus (13) is in contact, at the end face, with a rotary stop (31) of the base part (2) or of the tensioning part (3).

6. Tensioner according to claim 5,
**characterised in that**
the friction apparatus (13) is held between the spring element (11) and the rotary stop (31).

7. Tensioner according to claim 6,
**characterised in that**
the friction apparatus (13) has a holding projection (32) which extends radially and which is arranged between the rotary stop (31) and the spring element (11).

8. Tensioner according to at least one of the preceding claims,
**characterised in that**
the friction apparatus (13) has a holding projection (32) which extends radially and which contacts the spring element (11) in an axial direction (6).

9. Tensioner according to at least one of the preceding claims,
**characterised in that**
the spring element (11) and the friction apparatus (13) jointly extend within an embedding profile (29) of the base part or of the tensioning part (3).

10. Tensioner according to at least one of the preceding claims,
**characterised in that**
the base part (2) or the tensioning part (3) has an external bush (16) which surrounds the friction apparatus (13) and against which said friction apparatus (13) rubs.

11. Tensioner according to at least one of the preceding claims,
**characterised in that**
the base part (2) or the tensioning part has an external bush (16) which surrounds the friction apparatus (13) and the respective other part (3) extends around an end section (19) of said external bush (16).

12. Tensioner according to at least one of the preceding claims,
**characterised in that**
an internal bush (7) of the base part (2) and an internal bush (9) of the tensioning part (3) are spaced apart axially from one another, the said internal bushes surrounding the axis of rotation (6) of the tensioning part.

13. Tensioner according to at least one of the preceding claims,
**characterised in that**
the radially inner region (12) between the spring element (11) and the base part (2) and/or the tensioning part (3) is a clear distance.

## Revendications

1. Tendeur (1) pour transmission sans fin, notamment d'un moteur à combustion interne, ledit tendeur comportant une partie de base (2) et une partie de tension (3) apte à tourner par rapport à ladite partie de base autour d'un axe de rotation commun, un élément formant ressort (11) disposé dynamiquement entre la partie de base (2) et la partie de tension (3), qui s'expanse radialement en cas de tension, ainsi qu'un dispositif à friction (13), qui est agencé entre l'élément formant ressort (11) et la partie de base (2) ou la partie de tension (3), et qui amortit le mouvement relatif entre la partie de base (2) et la partie de tension (3), ledit dispositif à friction (13) étant disposé radialement à l'extérieur de l'élément formant ressort (11) et s'évase en cas de tension par l'élément formant ressort (11), et une extrémité de ressort (35), pointant dans une direction circonférentielle, de l'élément formant ressort (11), se trouve en appui du côté frontal avec une butée rotative (34) de la partie de base (2),
**caractérisé en ce que**
une extrémité de ressort (30), pointant dans une direction circonférentielle, se trouve en appui du côté frontal avec une butée rotative (31) de la partie de tension (3), et le dispositif à friction (13) comporte, radialement à l'intérieur de celui-ci, une douille de support (21) sur laquelle une garniture de friction (22) est prévue radialement à l'extérieur.

2. Tendeur selon la revendication 1, **caractérisé en ce que** le dispositif à friction (13) porte, par un côté radialement extérieur (15), contre la partie de base (2) ou la partie de tension.

3. Tendeur selon au moins l'une des revendications précédentes, **caractérisé en ce que** le dispositif à friction (13) est déjà maintenu contre l'élément formant ressort (11) lorsque ledit élément formant ressort (11) est dans un état détendu.

4. Tendeur selon au moins l'une des revendications précédentes, **caractérisé en ce que** le dispositif à friction (13) possède une structure de retenue (26) qui s'étend radialement vers l'intérieur, et au moyen de laquelle ledit dispositif à friction est maintenu dans une direction axiale (6) contre l'élément formant ressort (11).

5. Tendeur selon au moins l'une des revendications précédentes, **caractérisé en ce que** le dispositif à friction (13) se trouve en appui du côté frontal avec une butée rotative (31) de la partie de base (2) ou de la partie de tension (3).

6. Tendeur selon la revendication 5, **caractérisé en ce que** le dispositif à friction (13) est maintenu entre l'élément formant ressort (11) et la butée rotative (31).

7. Tendeur selon la revendication 6, **caractérisé en ce que** le dispositif à friction (13) possède une saillie de retenue (32), s'étendant radialement, qui est disposée entre la butée rotative (31) et l'élément formant ressort (11).

8. Tendeur selon au moins l'une des revendications précédentes, **caractérisé en ce que** le dispositif à friction (13) possède une saillie de retenue (32), s'étendant radialement, qui porte dans une direction axiale (6) contre l'élément formant ressort (11).

9. Tendeur selon au moins l'une des revendications précédentes, **caractérisé en ce que** l'élément formant ressort (11) et le dispositif à friction (13) s'étendent conjointement dans un profilé d'encastrement (29) de la partie de base ou de la partie de tension (2).

10. Tendeur selon au moins l'une des revendications précédentes, **caractérisé en ce que** la partie de base (2) ou la partie de tension (3) comporte une douille extérieure (16) qui entoure le dispositif à friction (13), et contre laquelle frotte le dispositif à friction (13).

11. Tendeur selon l'au moins une des revendications précédentes, **caractérisé en ce que** la partie de base (2) ou la partie de tension comporte une douille extérieure (16) qui entoure le dispositif à friction (13), et l'autre partie (3) enveloppe une portion d'extrémité (19) de ladite douille extérieure (16).

12. Tendeur selon au moins l'une des revendications précédentes, **caractérisé en ce qu'**une douille intérieure (7) de la partie de base (2) et une douille intérieure (9) de la partie de tension (3) sont axialement distantes l'une de l'autre, lesdites douilles intérieures entourant l'axe de rotation (6) de la partie de tension.

13. Tendeur selon au moins l'une des revendications précédentes, **caractérisé en ce que** la région radialement intérieure (12) constitue un écartement entre l'élément formant ressort (11) et la partie de base (2) et/ou la partie de tension (3).
